# EUROPEAN PATENT APPLICATION

(11) **EP 4 745 993 A1**
(43) Date of publication of application: **20.05.2026**
(21) Application number: 24214012.7
(22) Date of filing: 19.11.2024
(51) Int. Cl.: G21C 19/19, G21C 3/54

(54) **FUELLING A MOLTEN SALT REACTOR**

(71) Applicant: Saltfoss Energy ApS, 2200 Copenhagen (DK)
(72) Inventor: Yoon, Juhyeon, 2200 Copenhagen (DK)
(74) Representative: Meissner Bolte Partnerschaft mbB

(57) **Abstract**

The present invention relates to a fuel salt feeding apparatus (8) for a molten salt reactor (MSR), comprising: a fuel container (9) for holding fuel salt units; a feeding pipe (11) connected to the fuel container for transferring fuel salt units from the fuel container to a molten salt container (12); a valve structure (1) on the feeding pipe, said valve structure comprising: a bucket member (4, 14) having a fuel salt unit compartment (7) for containing one or more fuel salt units, and a bucket member position detector; a release valve (15) on the feeding pipe downstream from the valve structure, said release valve comprising a release valve position detector; a fuel salt unit detector (16) on the feeding pipe.

## Description

### Field of the invention

The present invention relates to fuel loading of a molten salt reactor, especially online fuel loading. The molten salt reactor is a fission reactor where the fissile fuel is provided as a salt with a salt composition comprising a fissile material such as an isotope of uranium. Online fuelling of fission reactors provides a convenient way of minimising excess reactivity for a continuous reactor operation.

### Background of the Invention

Molten salt reactors (MSRs) are based on a critical concentration of a fissile material dissolved in a molten salt. The molten salt comprising the fissile material is commonly referred to as the fuel salt or molten fuel salt. Research was conducted on MSRs initially at the Oak Ridge National Laboratory (ORNL) in the 1950's and 1960's but is yet to be successfully commercialised. MSRs have several advantages over other reactor types, including those being in commercial use nowadays. MSRs are capable of breeding fissile U-233 from thorium, of producing much lower levels of transuranic actinide waste than uranium/plutonium fuelled reactors; capable of operating at high temperatures, capable of avoiding accumulation of volatile radioactive fission products in solid fuel rods and capable of combusting larger amounts of fissile material than is possible in conventional reactors. Other particular attractive features of an MSR are the operation at ambient or low pressure and the retention of the fission products as strongly bonded salts which are conventionally either fluoride salts or chloride salts.

The keywords for operation of nuclear facilities in general and not specifically for the MSR's are often summarised as: "safety", "security" and "safeguarding" where "safety" often has been discussed in the wake of the nuclear accidents that has occurred over the decades such as the Japanese Fukushima nuclear disaster (2011), the Chernobyl disaster (1986) and the Three Mile Island accident (1979). The "safety" issues with an MSR are believed to be less for the reasons stated above compared to for example conventional light water reactors that use solid fissile fuel in stationary fuel rods in the reactor core. The "safeguarding" issue attracts on the other hand much bigger attention for MSR's. Nuclear safeguarding can be defined as measures to verify that nuclear materials are accounted for and are not diverted to undeclared uses, most prominently the use for nuclear weapons. One simple reason for the attention for an MSR can be seen when comparing with a light water reactor. For a light water reactor, the fissile material is standardised solid fuel pellets packed in fuel rods of a highly regulated design, and the fissile inventory is easily accounted for by simply counting the number of the fuel rods in the core by visual inspection. The theft of any fissile material for weapon use can therefore not take place unnoticed and is unrealistic due to the very high radiation in the core containing the fuel rods. It would require a long time shut-down of the fission process before the fuel rods could even be remotely approached with the aim to extract the fissile material. The situation for an MSR is very different because the fissile material is dissolved in a liquid (the molten salt) that could in principle be tapped in its liquid state somewhere along the molten salt fuel loop outside the reactor core where the radiation level is lower. The extraction of the fissile material from the molten salt is also fairly uncomplicated. For example, chemical methods for separating the uranium and the plutonium from a mixture of molten metal fluorides are well-known. It is expected that a solution as a "Safeguards-by-design" concept to address the problem of extracting fissile material from the molten fissile fuel salt loop can be found so that the authorities accept to issue operating licenses for MSR's. The IAEA (International Atomic Energy Agency) considers the "Safeguards-by-design" concept to be vital for implementation of safeguard implementation, especially to minimise the burden on reactor operation.

Another problem when safeguarding for an MSR occurs in relation to loading solid (not melted) salt to the fuel loop such as during a startup phase of the MSR where the molten salt is warmed up and especially when a refuelling of the MSR during its lifetime is needed to maintain an excess reactivity for continuous operation.

CN114842989A disclose a molten salt feeding system and a method for feeding solid salt to an MSR. The system comprises a storage silo for the fissile fuel exemplified as 1 cm spheres of LiF-UF₄ and the storage silo is connected via a feeding pipeline to the molten salt in an MSR. The pipeline can be purged with a gas such as He gas to avoid off-gassing products escaping from the reactor to the storage silo through the pipeline and further beyond to the external. There is furthermore a safety valve on the pipeline. There is disclosed a feeding control module connected with a detector for the fuel, the safety valve, the purging device and a pressure transmitter for controlling the feeding. The storage silo is opened when feeding the fuel as a first step in providing the fuel. The opening of the storage silo can happen as a response to a signal of a decreasing reactivity and thereby a need for further fuel but there are otherwise no details about how the silo is opened for the fuel salt to exit the storage silo.

WO24107576 disclose a sampling system for molten salt where a valve can be opened to extract liquid molten salt to be analysed. The valve may be a ball valve type.

### Summary of the invention

It was an object of the present invention to provide a method of supplying fissile fuel to a molten salt reactor with an improved high degree of accountability of the supplied fissile fuel amount.

It was an object of the present invention to provide an apparatus for performing the above method, said apparatus being mechanically simple and reliable.

In accordance with an aspect of the invention, there is provided a fuel salt feeding apparatus for a molten salt reactor (MSR), comprising:
- a fuel container for holding fuel salt units;
- a feeding pipe connected to the fuel container for transferring fuel salt units from the fuel container to a molten salt container;
- a valve structure on the feeding pipe, said valve structure comprising:
- a bucket member having a fuel salt unit compartment for containing one or more fuel salt units, and
- a bucket member position detector;
- a release valve on the feeding pipe downstream from the valve structure, said release valve comprising a release valve position detector;
- a fuel salt unit detector on the feeding pipe.

In accordance with a further aspect, there is provided a method of fuelling a molten salt reactor (MSR), comprising the steps of:
- providing a fuel salt feeding apparatus comprising:
- a fuel container for holding fuel salt units;
- a feeding pipe connected to the fuel container for transferring fuel salt units from the fuel container to a molten salt container;
- a valve structure on the feeding pipe, said valve structure comprising:
- a bucket member having a fuel salt unit compartment for containing one or more fuel salt units, wherein one or more gas holes are provided in the bucket member, and
- a bucket member position detector;
- a release valve on the feeding pipe downstream from the valve structure, said release valve comprising a release valve position detector;
- a fuel salt unit detector on the feeding pipe,
wherein the method further comprises the steps of:
1) setting and detecting the bucket member position to a closed position and setting and detecting the release valve position to a closed position;
2) setting and detecting the bucket member position to a position releasing the pressure from the fuel container into a feeding pipe section between the valve structure and the release valve through the gas holes in the bucket member;
3) setting and detecting the bucket member position to an open position thereby releasing the one or more fuel salt units to the feeding pipe;
4) setting and detecting the bucket member to a closed position;
5) setting and detecting the release valve to an open position, thereby releasing the one or more fuel salt units to the molten salt container.
6) detecting one or more fuel salt units in the feeding pipe with the fuel salt unit detector.

### Detailed Description

The fuel salt feeding apparatus for a molten salt reactor (MSR), comprises:
- a fuel container for holding fuel salt units;
- a feeding pipe connected to the fuel container for transferring fuel salt units from the fuel container to a molten salt container;
- a valve structure on the feeding pipe, said valve structure comprising:
- a bucket member having a fuel salt unit compartment for containing one or more fuel salt units, and
- a bucket member position detector;
- a release valve on the feeding pipe downstream from the valve structure, said release valve comprising a release valve position detector;
- a fuel salt unit detector on the feeding pipe.

We find that such a fuel salt feeding apparatus and the method for using the apparatus has numerous advantages. The valve structure is capable of opening into the fuel salt unit inventory in the fuel container where a fuel salt unit will drop by gravity into a fuel salt unit compartment in the inner part of the valve structure. One or a few fuel salt units of a well-defined number such as two or three fuel salt units can in this way be loaded into the compartment by a simple mechanical movement such as a rotation of the compartment. The number of fuel salt units loaded into the compartment is determined by the shape and volume of the fuel salt unit in relation to the volume and shape of the compartment and is thus clearly defined and accounted for which adds to the Safeguards-by-design (SBD) of the feeding apparatus. An example of loading a single fuel salt unit is further exemplified in the following. At least two further features of the feeding apparatus add to the SBD concept. Firstly, a fuel salt unit detector on the feeding pipe accounts for the actual passage and distribution of the single fuel salt unit that was loaded in the compartment. Secondly, a release valve positioned downstream from the valve structure halts the passage of the fuel salt unit briefly and opens for the fuel salt unit to eventually reach the molten salt. The opening of the release valve is detected and thus accounts for the release of the fuel salt unit into the molten salt. All the detected signals of 1) the opening/closing of the valve structure, 2) the detection of the passage of a fuel salt unit in the feeding pipe and 3) the opening/closing of the release valve in the feeding process can be recorded and sent online to the relevant authorities for safeguarding purposes.

Preferred versions of the valve structure include a ball-valve similar structure which are well-known to perform well and reliable for large loads and pressures. A ball-valve has a characteristic movable part called a turning gate member, bucket conveyor member or bucket member with the shape of a ball.

One example of a ball valve is the trunnion ball valve, where the ball connects to a stem with a shaft called a trunnion in each end of the rotation axis. Adapting of a trunnion ball valve to the valve structure performs well when a gas-tight operation is needed especially to prevent fission gas escape in a closed position of the valve. The trunnion ball valve feature of the valve structure requires less operating power and less maintenance compared with other ball valve types.

The ball size of ball-valves conventionally is in the range of a 5 to 1200 mm ball diameter, thus capable of holding very large fuel salt units in the fuel salt unit compartment of the bucket member, such fuel salt units weighing for example several kilos and performing reliable for several years with a high refuelling frequency. Another type of a ball valve is a floating ball valve named so because the bucket member of the valve is the shape of a ball, and the ball is not supported by any other components except for sealing rings used for sealing.

### The fuel salt feeding apparatus

In one embodiment, a fuel salt feeding apparatus for a molten salt reactor (MSR) is provided, comprising:
- a fuel container for holding fuel salt units;
- a feeding pipe connected to the fuel container for transferring fuel salt units from the fuel container to a molten salt container;
- a valve structure on the feeding pipe, said valve structure comprising:
- a bucket member having a fuel salt unit compartment for containing one or more fuel salt units, and
- a bucket member position detector;
- a release valve on the feeding pipe downstream from the valve structure, said release valve comprising a release valve position detector;
- a fuel salt unit detector on the feeding pipe.

The feeding pipe connects the fuel container to a molten salt container and defines a path for transferring fuel salt units in a direction from the fuel container to the molten salt container. The feeding pipe is generally vertically oriented in the gravity field or oriented so that a fuel salt unit is moved and transferred inside the pipeline by way of gravitational forces. A point on the feeding pipe close to the fuel container is upstream in relation to a point on the feeding pipe close to the molten salt container.

The valve structure can receive one or more fuel salt units from the fuel container into a compartment and hold and release the one or more fuel salt units into the feeding pipe. The valve structure is integrated between the fuel container for the fuel salt units and the feeding pipe and may have a body which is housing a seat inside. The seat has a bucket member with a compartment inside and the compartment orientation can be changed. Such a construction of the valve structure is analogue to the structure of a conventional ball valve. The bucket member in a valve structure is the shape of a ball preferably where the compartment is formed as a bore in the ball shape and the orientation of the bore decides if the bucket member position is open or closed. Preferably, the bucket member of the valve structure according to the invention has a fuel salt unit compartment and the orientation of the fuel salt unit compartment decides if the valve structure receives or releases one or more fuel salt units.

The bucket member position detector and/or the release valve position detector may be a kind of a detector that records the rotation movement of the bucket member by 1) recording the onset of a drive mechanism for the rotation movement, 2) the stop of the drive mechanism once the wanted position has been reached, and 3) translates the onset and the stop into a position expressed as an angle of rotation. Such a kind of detector is conventionally known as mechanical counter, solid state proximity swich, limit switch, etc.

The fuel salt unit detector detects the passage of a fuel salt unit in the pipeline. The fuel salt unit detector may comprise an infrared light beam source in the passageway of the pipeline with a light sensor opposite the beam source, such as an infrared passage (motion) sensor. The passage of the fuel salt unit will result in a brief dimming in light intensity which is recorded by the light sensor.

The release valve may have a similar structure as the valve structure with its own bucket member in which case the release valve position is determined by the position of the bucket member belonging to the release valve.

In one embodiment, the bucket member has more than one fuel salt unit compartments, such as two fuel salt unit compartments, such as three fuel salt unit compartments. The provision of more than one fuel salt unit compartment may provide a selection of different sizes of compartments suited for fuel salt units with different volumes. For example, the bucket member may have two fuel salt unit compartments, where one fuel salt unit compartment has a larger volume than the other fuel salt unit, and this enables a fuel salt unit with a larger volume to be used in the feeding process than with the other fuel salt unit compartment. This enables a flexible amount of fuel to be added to the reactor.

In one embodiment, one or more gas holes are provided in the bucket member. The provision of one or more gas holes in the bucket member enables a passage through the solid bucket member from one opening point on the outer surface of the bucket member to another opening point on the outer surface of the bucket member. The passage may cross the compartment.

When the bucket member position is closed then none of the opening points of the gas holes are facing the inner of the fuel container and there is no flow of gas from the fuel container to the other parts of the fuel salt feeding apparatus such as the feeding pipe. Thus, the bucket member is not permeable to allow a gas flow when the bucket member position is closed. When the bucket member is moved to another position than closed then this may provide a position where a gas will flow from the fuel container to other parts of the fuel salt feeding apparatus when the pressure in the fuel container is larger than in said other parts of the fuel salt feeding apparatus. By requiring that the pressure in the fuel container is larger than in said other parts of the fuel salt feeding apparatus, no radioactive fission gases will backflow into the fuel container. The pressure values may be measured by installing pressure sensors or installing lead lines to avoid the harsh conditions.

In one embodiment, the bucket member is the shape of a ball.

The ball shape of the bucket member being has many advantages, such as a ball shape being easy to manufacture and being a mechanically robust shape. The valve structure with a ball shape as a bucket member is analogous to the well-proven design of a ball valve and has therefore a high technology readiness level for this reason alone. The fuel salt unit compartment may be manufactured in the ball shape bucket member by boring into the shape ball to remove a specified volume of the solid material.

In one embodiment, the bucket member is the shape of a ball and rotatable supported by trunnions. Preferably, two trunnions are supporting the bucket member, and the two trunnions define a rotation axis.

In one embodiment, the bucket member is floating with the shape of ball.

In one embodiment, the fuel salt unit compartment is made by boring into a ball shape to provide a substantially cylindrical compartment shape.

In one embodiment, the bucket member is a cylinder.

Another shape than a ball shape of the bucket member may be a cylinder shape which is analogous to the bucket member found in a conventional plug valve. The fuel salt unit compartment may be manufactured in the cylinder bucket member by boring into the cylinder to remove a specified volume of the solid material as for the ball shaped bucket member described above.

In one embodiment, the fuel salt unit compartment is made by boring into a cylinder to provide a substantially cylindrical compartment shape.

In one embodiment, the fuel salt unit compartment in a cylinder bucket member has a substantially cylindrical compartment shape with a cylinder length direction parallel to the length direction of the cylinder bucket member.

In one embodiment, the compartment can hold only one cylindrically shaped fuel salt unit or two cylindrically shaped fuel salt units side-by-side or two cylindrically shaped fuel salt units on top of each other or only one ball shaped fuel salt unit or two ball shaped fuel salt units side by side or two ball shaped fuel salt units on top of each other.

In one embodiment, the fuel salt unit compartment has a volume that can contain only one fuel salt unit, said one fuel salt unit having a value of the volume in the interval between 10 cm³ to 6000 cm³, such as between 100 cm³ to 5000 cm³, such as between 200 cm³ to 4000 cm³, such as between 300 cm³ to 3000 cm³.

The fuel salt unit size is determined by several factors. A small size may be preferred when the object is to minimise the storage volume for the fuel salt units and to minimise the melting time of the fuel salt units. There are however disadvantages of a small unit size such as the need for a high enrichment to avoid that the frequency of adding a single or a few fuel salt units at a time while also accounting for the number of fuel salt units becomes prohibitively high. Another concern is that a small fuel salt unit with a small volume may heat quicker through the entire volume and thereby melt quicker compared to a larger volume fuel salt unit. This quick melting process and quick release of fresh fuel can cause a reactivity surge and instability of the reactor which is always a concern.

A large size of fuel salt unit can solve many of the above issues such as using low enriched fuel but leads to heavy fuel salt units that are mechanically wearing most conventionally feeding mechanisms for nuclear fuel. The present invention provides a fuel salt feeding apparatus that present a mechanically robust solution to these known problems.

In one embodiment, the fuel salt unit compartment has a volume that can contain only one fuel salt unit, said one fuel salt unit having a value of the volume in the interval between 10 cm³ to 5000 cm³, such as between 100 cm³ to 4000 cm³, such as between 300 cm³ to 3000 cm³ and the fuel salt unit comprises a uranium salt with an enrichment of 1-14.9% of U-235, such as 2-8% of U-235, such as 4-7% of U-235.

In one embodiment, the fuel container comprises a fuel salt unit distributor.

In one embodiment, the fuel salt unit distributor comprises a funnel element with the narrow section immediately above the fuel salt unit compartment.

In one embodiment, the fuel salt unit distributor comprises a pipe structure containing all fuel salt units on top of each other.

The fuel salt unit distributor provides a reliable way of feeding one or a few fuel salt units at a time into the fuel salt unit compartment.

In one embodiment, the fuel salt unit detector on the feeding pipe is situated
- between the valve structure and the release valve; or
- downstream from the release valve.

In one embodiment, at least two fuel salt unit detectors are situated on the feeding pipe and are situated
- between the valve structure and the release valve; and
- downstream from the release valve.

The fuel salt unit detector on the feeding pipe may account for the fuel that is actually moving inside the pipe and onwards into the molten salt and not being diverted from the pipe.

The measurements from the valve structure position detector, the release valve position detector and the fuel salt unit detector can be combined in several ways to provide input for accounting for the inventory of fuel salt in the fuel container and the amount of the fuel salt from the inventory released into the molten fuel salt.

In one embodiment, a gas supply unit is connected to the fuel container.

The gas supply unit can supply a pressure so that the pressure in the fuel container is slightly higher than in the rest of the fuel salt feeding apparatus, such as the feeding pipe. The gas used in the gas supply unit may be helium (He).

In one embodiment, the feeding pipe comprises a first feeding pipe section and a second feeding pipe section, and a clamp is clamping the first feeding pipe section together with the second feeding pipe section, said first feeding pipe section comprising the valve structure and the release valve.

The clamp enables an easy way of disassembling the fuel salt feeding apparatus in two parts and a maintenance of a part of the fuel salt feeding apparatus off-site to avoid any radiation.

In one embodiment, the clamp is a Grayloc^{®} connector.

In one embodiment, a maintenance valve is situated downstream from the release valve.

In one embodiment, a basket is connected to the feeding pipe, said basket being capable of holding maximum 3 to 12 fuel salt units, such as maximum 5 to 10 fuel salt units.

In one embodiment, the feeding pipe has a length axis which has an angle between 20° to 50° to vertical.

The provision of a feeding pipe between the fuel container and the molten salt container where the feeding pipe has an angle between 20° to 50° to vertical provides less neutron radiation from the molten salt container. It may be an advantage, especially in the event that the molten salt container comprises a fissile salt composition.

In one embodiment, the feeding pipe has more than one bend and/or kink thereby not forming a free line of sight from one end of the feeding pipe to the other end of the feeding pipe.

The provision of a feeding pipe between the fuel container and the molten salt container where the feeding pipe has more than one bend and/or kink provides less neutron radiation from the molten salt container. It may be an advantage, especially in the event that the molten salt container comprises a fissile salt composition.

Furthermore, this embodiment also prevents any plunging of fuel salt units into the molten salt of the molten salt container because the transport of the fuel salt unit under the influence of gravity in the feeding pipe is halted at several points of the feeding pipe.

### The method of fuelling a molten salt reactor (MSR)

In one embodiment, a method of fuelling a molten salt reactor (MSR) is provided comprising the steps of:
- providing a fuel salt feeding apparatus comprising:
- a fuel container for holding fuel salt units;
- a feeding pipe connected to the fuel container for transferring fuel salt units from the fuel container to a molten salt container;
- a valve structure on the feeding pipe, said valve structure comprising:
   - a bucket member having a fuel salt unit compartment for containing one or more fuel salt units, wherein one or more gas holes are provided in the bucket member, and
   - a bucket member position detector;
- a release valve on the feeding pipe downstream from the valve structure, said release valve comprising a release valve position detector;
- a fuel salt unit detector on the feeding pipe,
wherein the method further comprises the steps of:
1) setting and detecting the bucket member position to a closed position and setting and detecting the release valve position to a closed position;
2) setting and detecting the bucket member position to a position releasing the pressure from the fuel container into a feeding pipe section between the valve structure and the release valve through the gas holes in the bucket member;
3) setting and detecting the bucket member position to an open position thereby releasing the one or more fuel salt units to the feeding pipe;
4) setting and detecting the bucket member to a closed position;
5) setting and detecting the release valve to an open position, thereby releasing the one or more fuel salt units to the molten salt container.
6) detecting one or more fuel salt units in the feeding pipe with the fuel salt unit detector.

The setting and detecting may be done by a driving mechanism where the provision of an electric current provides power to the drive and where the electric current can provide a detected signal for the detection of the position.

The setting and detecting of the bucket member position to a closed position is so that the closed position is a position where no gas can flow from the fuel container to the feeding pipe. The closed position is preferably where a symmetry axis of the fuel salt unit compartment forms an angle of 0° or approximately 0° with vertical.

The setting and detecting of the bucket member position to a position releasing the pressure from the fuel container is so that the gas can flow from the fuel container to the feeding pipe. This position is preferably where a symmetry axis of the fuel salt unit compartment forms an angle of 90° or approximately 90° with vertical.

The setting and detecting of the bucket member position to an open position thereby releasing the one or more fuel salt units to the feeding pipe is so that the fuel salt unit compartment is open towards the feeding pipe in a degree where the fuel salt unit is not held in the fuel salt unit compartment and can drop into the feeding pipe. This position is preferably where a symmetry axis of the fuel salt unit compartment forms an angle of 180° or approximately 180° with vertical, where 180° is relative to 0° defined as the angle above for step 1) the 180° position being where no gas can flow from the fuel container to the feeding pipe.

When the bucket member position is such that the symmetry axis of the fuel salt unit compartment forms an angle of 180° or 0° with vertical then none of the opening points of the gas holes are facing the inner of the fuel container and there is no flow of gas from the fuel container to the other parts of the fuel salt feeding apparatus such as the feeding pipe. Thus, the bucket member is not permeable to allow a gas flow when the bucket member position is closed, for example.

In one embodiment, the steps 1), 2), 3), 4), 5) and 6) are carried out in the order 1), 2), 3), 4), 5) and 6). The steps 1) to 4) can be repeated before operating the release valve to feed multiple fuel salt units before the setting and detecting of the release valve to an open position in step 5).

In one embodiment, the release valve can only be in an open position when the bucket member position is in a closed position.

In one embodiment, the method comprises a further step of providing in situ communication to an authority of the data from the steps 1) to 6):
- the detected positions of the bucket member;
- the detected positions of the release valve;
- the detection of the one or more fuel salt units in the feeding pipe.

In one embodiment, the method comprises the further steps of providing a gas pressure in the fuel container that is larger than the cover gas pressure in the molten salt container, both pressures being relative pressures, thus P_{Fuel container} > P_{cover gas}, before step 2).

In one embodiment, the steps 1) to 6) are performed with a frequency of 0.05 to 40 per day, such as a frequency of 0.5 to 20 per day, such as a frequency of 1 to 6 per day.

In one embodiment, 14. the molten salt container is in communication via a pipeline with the molten salt of the molten salt reactor core.

In one embodiment, the pipe feeding section of the fuel salt feeding apparatus comprising the valve structure and the release valve is in a region that is radiologically accessible for inspection and maintenance.

The region that is radiologically accessible for inspection and maintenance is on the other side of a radiation shielding of the reactor core and piping containing fuel salt.

In one embodiment, the feeding apparatus is outside the biological shielding so that the feeding apparatus can undergo inspection by authorities.

In one embodiment, the method of fuelling a molten salt reactor (MSR), comprises the steps of:
- providing a fuel salt feeding apparatus comprising:
- a fuel container for holding fuel salt units;
- a feeding pipe connected to the fuel container for transferring fuel salt units from the fuel container to a molten salt container;
- a valve structure on the feeding pipe, said valve structure comprising:
   - a bucket member having a fuel salt unit compartment for containing one or more fuel salt units, wherein one or more gas holes are provided in the bucket member, and
   - a bucket member position detector;
- a release valve on the feeding pipe downstream from the valve structure, said release valve comprising a release valve position detector;
- a fuel salt unit detector on the feeding pipe,
wherein the method further comprises the steps of:
1) setting and detecting the bucket member position to 0° denoting a closed position and setting and detecting the release valve position to 0° denoting a closed position;
2) setting and detecting the bucket member position to 90° thereby releasing the pressure from the fuel container into a feeding pipe section between the valve structure and the release valve;
3) setting and detecting the bucket member position to 180° denoting an open position thereby releasing the one or more fuel salt units to the release valve;
4) setting and detecting the bucket member to 0° denoting a closed position;
5) setting and detecting the release valve to 90° denoting an open position, thereby releasing the one or more fuel salt units to the molten salt container.
6) detecting one or more fuel salt units in the feeding pipe with the fuel salt unit detector, wherein
the fuel salt unit compartment defining an axis being 0° to vertical when the valve position is closed, the axis being 90° to vertical when the valve position releases pressure, the axis being 180° to vertical when the valve position is open.

### Brief description of the drawings

In the following the invention will be explained in greater detail with the aid of examples and with reference to the schematic drawings, in which:
Figure 1 shows a valve structure comprising a trunnion ball valve adapted with a fuel salt unit compartment.
Figure 2 shows a fuel salt feeding apparatus according to the invention.

### Figure numerals:

1. valve structure
2. body
3. seat
4. ball (the bucket member)
5. trunnion
6. stem
7. fuel salt unit compartment
8. fuel salt feeding apparatus
9. fuel container
10. fuel salt unit
11.feeding pipe
12. molten salt container
13. valve structure
14. bucket member
15. release valve
16. fuel salt unit detector
17. gas supply unit
18. clamp
19. maintenance valve
20. perforated basket
21.molten salt

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

The term "comprising" as used in this specification and claims means "consisting at least in part of". When interpreting statements in this specification and claims which include the term "comprising", other features besides the features prefaced by this term in each statement can also be present. Related terms such as "comprise" and "comprised" are to be interpreted in a similar manner.

### Detailed Description

The invention will now be illustrated in the following non-limiting example.

### Example 1

In this example, a fuel salt feeding apparatus 8 and a method of fuelling a molten salt reactor with the fuel salt feeding apparatus 8 is described.

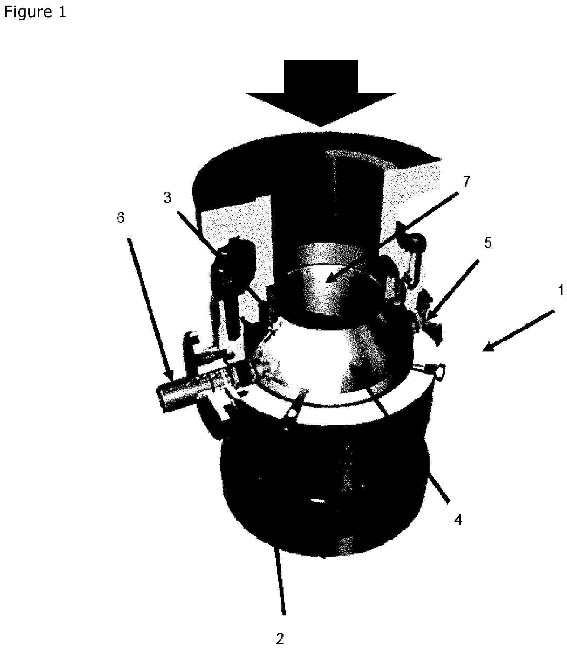

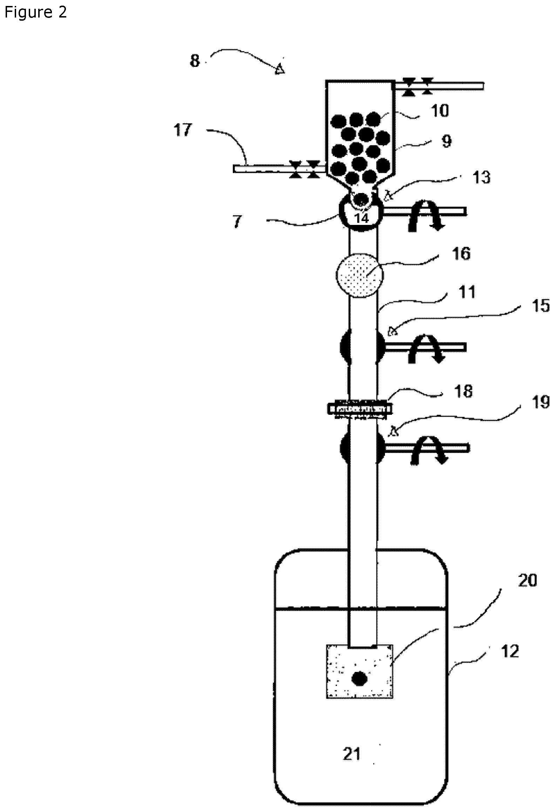

Figure 1 shows the valve structure 1 with an arrow showing the downstream direction for feeding fuel salt units 10, see figure 2. A fuel salt unit compartment 7 is shown empty without a fuel salt unit 10 and the valve structure 1 is shown in the closed position. The body 2 and the seat 3 of the valve structure 1 supports a bucket member having a ball shape 4 in the shown example and the ball shaped bucket member 4 can be rotated around an axis along the stem 6 and trunnion 5.

Figure 2 shows the fuel salt feeding apparatus 8 as a refuelling system comprising a fuel container 9 for fuel salt units 10 where a feeding pipe 11 connects the fuel container 9 to a molten salt container 12 to enable communication of fuel salt units 10 from the fuel container 9 into the molten salt 21 of the molten salt container 12. The molten salt 21 in the molten salt container 12 is fluidically coupled (not shown) to a salt system of the molten salt reactor including the core. A He gas supply unit 17 is connected to the fuel container 9 to provide a He containing atmosphere inside the fuel container 9. Air and moisture inside the refuelling system can be purged using the He supply system 17, typically during the commissioning stage of the molten salt reactor. For this purpose, all the valves of the fuel salt feeding apparatus are opened. After the He purging process, the valves are closed again before loading the fuel salt units 10 exemplified as fuel salt balls (fuel-balls) into the fuel container 9 through an inlet (not shown). This condition before fuel-ball loading is characterised by two valves being closed and the fuel container 9 being filled with He-gas. After the loading of the fuel salt units 10 to the fuel container 9, air and moisture inside the fuel container 9 will be purged once more using the He supply system 17 and purge valves with an outlet to the off-gas system.

The valve structure 1 of this example comprises a fuel salt unit compartment 7 with a size that can receive and hold only one fuel salt unit 10 at a time from the fuel container 9 in the closed valve position. When supplying a fuel salt unit 10 to the molten salt 21 at the other end of the feeding pipe 11 the valve structure 1 starts in the closed position and the release valve 15 is in a closed position. The valve structure 1 can only be opened when the pressure P_{He} in the fuel container 9 is larger than the pressure P_{cover gas} in the molten salt container 12, thus P_{He} > P_{cover gas}. In this state the valve structure 1 is then rotated 90° which releases the pressure from the fuel container 9 into the feeding pipe section between the valve structure 1 and release valve 15 so it is pressurized with the He pressure of the fuel container 9 which is set higher than the cover gas pressure inside the molten salt container 12. By rotating the valve structure 1 by 90° further to the 180° the valve state is open and the fuel salt unit 10 will drop by gravity inside the feeding pipe 11 onto the release valve 15 where it will be stopped. At this angle, 180°, the valve structure 1 is gas-tight between the fuel container 9 and the feeding pipe section, the same as in the 0° position. In this process, the fuel salt unit detector 16 situated on the feeding pipe section between the valve structure 1 and the release valve 15 will detect the fuel salt unit 10 passing. The information of this detection signal and the detection and recording of the number of rotations of the valve structure 1, accounts for the number of fuel salt units 10 being fed which is crucial for safeguarding purposes.

The valve structure 1 is now rotated back to the closed state again. The release valve 15 is thereafter opened, and it can only open when the valve structure 1 is in the closed state. By rotating the release valve 15 by 180° to the open state, the fuel salt unit 10 drops by gravity inside the feeding pipe 11 and is fed into a perforated basket 20 inside the molten salt container 12. The fuel salt unit 10 dissolves and is mixed with the molten salt 21 in the molten salt container 12. The perforated basket 20 is installed well below the molten salt liquid level to minimize any off gassing from the molten salt 21 coming up into the feeding pipe 11.

## Claims

1. A fuel salt feeding apparatus for a molten salt reactor (MSR), comprising:
- a fuel container for holding fuel salt units;
- a feeding pipe connected to the fuel container for transferring fuel salt units from the fuel container to a molten salt container;
- a valve structure on the feeding pipe, said valve structure comprising:
- a bucket member having a fuel salt unit compartment for containing one or more fuel salt units, and
- a bucket member position detector;
- a release valve on the feeding pipe downstream from the valve structure, said release valve comprising a release valve position detector;
- a fuel salt unit detector on the feeding pipe.

2. The fuel salt feeding apparatus according to claim 1, wherein one or more gas holes are provided in the bucket member.

3. The fuel salt feeding apparatus according to claim 1 or 2, wherein the bucket member is the shape of a ball.

4. The fuel salt feeding apparatus according to any one of the above claims, wherein the fuel salt unit compartment has a volume that can contain only one fuel salt unit, said one fuel salt unit having a value of the volume in the interval between 10 cm³ to 6000 cm³, such as between 100 cm³ to 5000 cm³, such as between 200 cm³ to 4000 cm³, such as between 300 cm³ to 3000 cm³.

5. The fuel salt feeding apparatus according to any one of the above claims, wherein the fuel container comprises a fuel salt unit distributor.

6. The fuel salt feeding apparatus according to any one of the above claims, wherein the fuel salt unit detector on the feeding pipe is situated
- between the valve structure and the release valve; or
- downstream from the release valve.

7. The fuel salt feeding apparatus according to any one of the above claims, wherein a gas supply unit is connected to the fuel container.

8. The fuel salt feeding apparatus according to any one of the above claims, wherein the feeding pipe comprises a first feeding pipe section and a second feeding pipe section, and a clamp which is clamping the first feeding pipe section together with the second feeding pipe section, said first feeding pipe section comprising the valve structure and the release valve.

9. A method of fuelling a molten salt reactor (MSR), comprising the steps of:
- providing a fuel salt feeding apparatus comprising:
- a fuel container for holding fuel salt units;
- a feeding pipe connected to the fuel container for transferring fuel salt units from the fuel container to a molten salt container;
- a valve structure on the feeding pipe, said valve structure comprising:
- a bucket member having a fuel salt unit compartment for containing one or more fuel salt units, wherein one or more gas holes are provided in the bucket member, and
- a bucket member position detector;
- a release valve on the feeding pipe downstream from the valve structure, said release valve comprising a release valve position detector;
- a fuel salt unit detector on the feeding pipe,
wherein the method further comprises the steps of:
1) setting and detecting the bucket member position to a closed position and setting and detecting the release valve position to a closed position;
2) setting and detecting the bucket member position to a position releasing the pressure from the fuel container into a feeding pipe section between the valve structure and the release valve through the gas holes in the bucket member;
3) setting and detecting the bucket member position to an open position thereby releasing the one or more fuel salt units to the feeding pipe;
4) setting and detecting the bucket member to a closed position;
5) setting and detecting the release valve to an open position, thereby releasing the one or more fuel salt units to the molten salt container.
6) detecting one or more fuel salt units in the feeding pipe with the fuel salt unit detector.

10. The method of claim 9, comprising the further step of
providing in situ communication to an authority of the data from the steps 1) to 6):
- the detected positions of the bucket member;
- the detected positions of the release valve;
- the detection of the one or more fuel salt units in the feeding pipe.

11. The method of any one of claims 9 or 10, comprising the further steps of providing a gas pressure in the fuel container that is larger than the cover gas pressure in the molten salt container, both pressures being relative pressures, thus P_{Fuel container} > P_{cover gas}, before step 2).

12. The method of any one of claims 9 to 11, wherein
the steps 1) to 6) are performed with a frequency of 0.05 to 40 per day, such as a frequency of 0.5 to 20 per day, such as a frequency of 1 to 6 per day.

13. The method of any one of claims 9 to 12, wherein
the molten salt container is in communication via a pipeline with the molten salt of the molten salt reactor core.

14. The method of any one of claims 9 to 13, wherein
the pipe feeding section of the fuel salt feeding apparatus comprising the valve structure and the release valve is in a region that is radiologically accessible for inspection and maintenance.
